# EUROPÄISCHE PATENTSCHRIFT

(11) **EP 1 514 010 B1**
(45) Veröffentlichungstag und Bekanntmachung des Hinweises auf die Patenterteilung: **26.07.2006**
(21) Anmeldenummer: 03760525.0
(22) Anmeldetag: 18.06.2003
(51) Int. Cl.: F01B 1/12, F02F 7/00, F02B 61/06, F02B 75/16

(54) **MODULARTIG AUFGEBAUTE BRENNKRAFTMASCHINE**
MODULE-LIKE CONSTRUCTED INTERNAL COMBUSTION ENGINE
MOTEUR A COMBUSTION INTERNE CONSTRUIT DE MANIERE MODULAIRE

(30) Priorität: 19.06.2002 AT 3962002
(43) Veröffentlichungstag der Anmeldung: 16.03.2005
(73) Patentinhaber: AVL List GmbH, 8020 Graz (AT)
(72) Erfinder: LAIMBÖCK, Franz, A-8051 THAL (AT)
(74) Vertreter: Babeluk, Michael
(86) Internationale Anmeldenummer: PCT/AT2003/000172
(87) Internationale Veröffentlichungsnummer: WO 2004/001194

(56) Entgegenhaltungen:
- DD-A- 244 793
- DD-A- 290 556
- DE-A- 2 253 100
- DE-A- 4 206 086
- US-A- 3 837 237
- US-A1- 2002 042 319

## Beschreibung

Die Erfindung betrifft eine modulartig aufgebaute Brennkraftmaschine mit einem Motorgehäuse mit einem Kurbeltrieb mit zumindest einem in einem Zylinder hin-und hergehenden Kolben, welcher über eine Pleuelstange auf eine Kurbelwelle einwirkt, mit einem über eine trennbare Kupplung mit der Kurbelwelle verbundenen Wechselgetriebe und einem mit zumindest einer Antriebswelle eines Fahrzeugs verbindbaren Getriebeausgangsstrang.

Aus der AT 3.397 U1 ist eine Brennkraftmaschine für ein Motorrad bekannt, bei der Baugruppen der Brennkraftmaschine modulartig und universell für zumindest zwei verschiedene Zylinderanordnungen ausgeführt sind. Dadurch können mit geringen Produktions- und logistischem Aufwand verschiedene Leistungsklassen und Zylinderanordnungen auf einfache Weise abgedeckt werden. Die Brennkraftmaschine eignet sich von der Konzeption her nur für Motorräder, nicht aber für andere Fahrzeugarten.

Aufgabe der Erfindung ist es, mit geringem Produktionsaufwand eine universell herstellbare und für eine große Anzahl von Ausführungen geeignete Brennkraftmaschine zu schaffen.

Erfindungsgemäß wird dies dadurch erreicht, dass die Brennkraftmaschine zumindest ein die Baugruppen Motorgehäuse, Kurbeltrieb, Wechselgetriebe und Getriebeausgangsstrang beinhaltendes Hauptmodul und zumindest ein am Hauptmodul anbaubares Nebenmodul aufweist, wobei Wechselgetriebe und Getriebeausgangsstrang innerhalb des Hauptmoduls mechanisch getrennt ausgeführt und durch Anbauen eines ersten Nebenmoduls am Hauptmodul drehverbindbar sind.

Dabei ist vorgesehen, dass das Hauptmodul zusätzlich noch zumindest eines der Bauteile Kurbelwelle, Massenausgleichswelle oder schaltbare Wellenkupplung aufweist. Das Motorgehäuse ist entweder für einen Zylinder oder für zwei Zylinder konzipiert.

Um eine möglichst hohe Variationszahl von Anwendungen zu ermöglichen, ist es besonders vorteilhaft, wenn das erste Nebenmodul zumindest eine Getriebestufe aus der Gruppe einfache Getriebestufe, Umkehrgetriebestufe, Untersetzungsgetriebestufe und Kriechgang-Untersetzungsgetriebestufe beinhaltet, wobei vorzugsweise der Achsabstand der Getriebestufe dem Achsabstand zwischen einer ausgangsseitigen Getriebewelle des Wechselgetriebes und einer eingangsseitigen Sekundärwelle des Getriebeausgangsstranges entspricht.

Der wesentliche Gedanke der Erfindung ist es, dass durch die Kombination eines Hauptmoduls für Einzylinder bzw. eines Hauptmoduls für Zweizylinder mit verschiedenen Nebenmodulen eine möglichst große Anzahl unterschiedlicher Fahrzeuganforderungen abgedeckt werden soll.

Durch den modularen Aufbau des Konzeptes können Diesel, Benzin, Ein- und Zweizylinder mit möglichst vielen Gleichteilen und nur zwei unterschiedlichen Motorgehäusen realisiert werden. Um eine einfache Herstellung zu ermöglichen, ist es besonders vorteilhaft, wenn alle Bearbeitungsflächen und Bohrungen des Motorgehäuses mit der Zylinderzahl n gleich angeordnet werden wie eine Teilmenge aller Bearbeitungsflächen und Bohrungen eines ähnlichen Motorgehäuses mit einer höheren Zylinderzahl m > n und dass das Motorgehäuse mit der Zylinderzahl n auf einer Bearbeitungsstation durchgeführt wird, deren Bearbeitungswerkzeuge für das ähnliche Motorgehäuse mit höherer Zylinderzahl m konfiguriert und adjustiert sind. Die Variablen n bzw. m stehen in konkreten praktischen Ausführungen beispielsweise für die ganzen Zahlen 1 und 2. Die Bearbeitung kann mit den selben Bearbeitungswerkzeugen durchgeführt werden, wobei die Schneiden zur Bearbeitung des zweiten Zylinders beim Bearbeiten eines Motorgehäuses für einen Zylinder ins "Freie" laufen.

Durch den Ein- und Anbau von Nebenmodulen, wie z.B. unterschiedliche Sekundäruntersetzungsstufen, Differential, Fliehkraftkupplung (Semiautomatik), Zapfwelle, Allradantrieb in oder an eines der beiden Motorgehäuse kann die jeweilige Motorvariante (Benzin oder Diesel, Ein- oder Zweizylinder) an den Einsatz im Fahrzeug angepasst werden.

Jedes der ersten Nebenmodule beinhaltet eine andere Sekundäruntersetzungsstufe. Einfache Untersetzungsstufen mit einem Zahnradpaar oder einer Kette ermöglichen den Einbau des Motors in das Fahrzeug je nachdem vor oder hinter der Antriebsachse, wobei das Getriebe und der Kurbeltrieb entweder vor dem Motor oder hinter dem Motor positioniert sind. Das zweite Nebenmodul mit einer durch ein Zahnradpaar gebildeten einfachen Getriebestufe ermöglicht beispielsweise die Anordnung des Motors vor der Antriebsachse, ein als Umkehrgetriebestufe ausgebildetes zweites Nebenmodul mit einer Kette ermöglicht die Anordnung des Motors hinter der Antriebsachse.

Der wahlweise Einbau von ersten Nebenmodulen mit Untersetzungsgetriebestufe oder mit einer Kriechgang-Untersetzungsgetriebestufe ermöglicht die Anwendung der Brennkraftmaschine für sogenannte ATV-Vehicles (all terrain vehicles) und Kleintraktoren. Für die Anwendung bei ATV kann das erste Nebenmodul eine Untersetzungsgetriebestufe aufweisen. Wird die Brennkraftmaschine für Kleintraktoren eingesetzt, so könnte es sinnvoll sein, ein erstes Nebenmodul mit einer inkludierten Kriechganggetriebestufe zu verwenden.

Insbesondere für die Anwendung der Brennkraftmaschine bei Kleintraktoren ist es besonders vorteilhaft, wenn ein zweites Nebenmodul mit einer Abzweiggetriebestufe für eine Zapfwelle an einer Getriebewelle des Wechselgetriebes anbaubar ist. Die Zapfwelle wird dabei über die erste Getriebewelle des Wechselgetriebes betrieben, wobei die Abzweiggetriebestufe vorteilhafterweise an einem Zahnrad der ersten Getriebewelle geschaltet wird.

In weiterer Ausbildung der Erfindung kann vorgesehen sein, dass ein drittes Nebenmodul mit einer schaltbaren Umkehrgetriebestufe für das Wechselgetriebe am Hauptmodul anbaubar ist. Die Schaltung der beispielsweise fünf Vorwärtsgänge und des Retourganges kann über eine Schaltwalze erfolgen.

In der einfachsten Ausführungsvariante, beispielsweise für eine Autorikscha, kann die Brennkraftmaschine differentiallos ausgeführt sein. In weiterer Ausführung kann vorgesehen sein, dass ein viertes Nebenmodul mit einem Differentialgetriebe für den Getriebeausgangsstrang am Hauptmodul anbaubar ist.

Zur Realisierung eines Allradantriebes, beispielsweise für ATV oder Kleintraktoren, kann weiteres vorgesehen sein, dass ein fünftes Nebenmodul mit einer Abtriebsgetriebestufe für den Getriebeausgangsstrang am Hauptmodul oder dem vierten Nebenmodul anbaubar ist.

In einer besonders bevorzugten Ausführungsvariante der Erfindung ist vorgesehen, dass ein sechstes Nebenmodul mit einer Fliehkraftkupplung am Eingang des Wechselgetriebes am Hauptmodul anbaubar ist. Dadurch kann eine Automatikkupplung zur Automatisierung (Semiautomatik) des Wechselgetriebes bzw. zum automatischen Anfahren realisiert werden. Somit ist ein Schalten ohne Kupplung möglich. Bei Betätigen des Schalthebels wird als überlagerte Funktion der Fliehkraftkupplung die zum Schalten erforderliche Trennung zwischen Motor und Getriebe bewerkstelligt. Um die Motorbremswirkung zu gewährleisten, beinhaltet die Fliehkraftkupplung einen Freilauf.

Um die Teileanzahl möglichst gering zu haften, ist in weiterer Ausführung der Erfindung vorgesehen, dass das erste Nebenmodul für alle Getriebevarianten das gleiche Gehäuse aufweist.

Zur Vereinfachung der Fertigung und der Montage der Teile ist in weiterer Ausführung der Erfindung vorgesehen, dass zumindest fünf Wellen, vorzugsweise zumindest die Kurbelwelle, die Ausgleichswelle, die erste Getriebewelle, die zweite Getriebewelle und die erste Sekundärwelle in einer Ebene liegen, welche vorzugsweise eine erste Teilungsebene zwischen zwei Gehäuseteilen ist. Die Wellen werden in den ersten oder in den zweiten Gehäuseteil eingelegt, so dass die Drehachsen der Wellen in der Teilungsebene liegen. Der andere Gehäuseteil wird einfach aufgesetzt. Diese Art der Montage hat den Vorteil, dass die Wellen nicht in Aufnahmenbohrungen der Gehäuseteile eingefädelt werden müssen.

Durch den modularen Aufbau der Brennkraftmaschine kann diese für die verschiedensten Anwendungen eingesetzt werden. Im Rahmen der Erfindung ist dabei vorgesehen, dass das Hauptmodul für zumindest zwei verschiedene Fahrzeugarten aus der Gruppe Autorikscha, ATV, Kleintraktor und Kleinstauto einsetzbar ist.

Die Erfindung wird im Folgenden anhand der Figuren näher erläutert. Es zeigen
- Fig. 1: die Module der erfindungsgemäßen Brennkraftmaschine in schematischer Ansicht,
- Fig. 1a: das Hauptmodul dieser Brennkraftmaschine in schematischer Ansicht,
- Fig. 2: die erfindungsgemäße Brennkraftmaschine in einer ersten Ausführungsvariante in einer Seitenansicht gemäß dem Pfeil II in Fig. 3 und 4,
- Fig. 3: die Brennkraftmaschine in einer Ansicht gemäß dem Pfeil III in Fig. 2,
- Fig. 4: die Brennkraftmaschine in einer Ansicht gemäß dem Pfeil IV in Fig. 2,
- Fig. 5: die Brennkraftmaschine im Schnitt gemäß der Linie V-V in Fig. 4 ,
- Fig. 6: die Brennkraftmaschine in einer zweiten Ausführungsvariante in einer Seitenansicht gemäß dem Pfeil VI in Fig. 7 und 8,
- Fig. 7: diese Brennkraftmaschine in einer Ansicht gemäß dem Pfeil VII in Fig. 6,
- Fig. 8: diese Brennkraftmaschine in einer Ansicht gemäß dem Pfeil VIII in Fig. 6 und
- Fig. 9: diese Brennkraftmaschine in einem Schnitt gemäß der Linie IX-IX in Fig. 8.

In den Ausführungsbeispielen sind funktionsgleiche Bauteile mit den gleichen Bezugszeichen versehen.

Funktionsgleiche Teile sind in den Ausführungsvarianten mit gleichen Bezugszeichen versehen. Die flüssigkeitsgekühlte Brennkraftmaschine 1 weist einen Kurbeltrieb 40 mit einem oder mehreren Zylindern 2 auf, in welchem ein in einer Zylinderlaufbuchse 3 hin- und hergehender Kolben 4 angeordnet ist. Der Kolben 4 wirkt über eine Pleuelstange 5 auf eine Kurbelwelle 6 und versetzt diese in Drehung. Die gebaute Kurbelwelle 6 ist über ein Zahnradpaar 7 und eine trennbare Kupplung 8 mit einer ersten Getriebewelle 9 eines Wechselgetriebes 10 verbunden, welches in den Ausführungsbeispielen als 5-Gang-Getriebe ausgeführt ist. Die Kupplung 8 ist im Ausführungsbeispiel als kombinierte schalt- und semiautomatische Kupplung ausgebildet. Die erste Getriebewelle 9 wirkt über schaltbare Getriebestufen 9a auf eine zweite Getriebewelle 11. Ein ständig mit der Kurbelwelle 6 verbundener Teil 8a der Kupplung 8 bildet den Steuerantrieb für die Gaswechselventile 23, 24 und für eine Einspritzpumpe 50, 50a. Weiters können noch Nebenaggregate wie Wasserpumpe 51, Drehzahlregler 52 oder dergleichen vom Teil 8a angetrieben werden.

Der Getriebeausgangsstrang 12 beinhaltet eine erste Sekundärwelle 13 und eine zweite Sekundärwelle 14, welche auf zumindest eine Antriebswelle 15 wirkt. Erste und zweite Sekundärwellen 13, 14 sind über eine Zahnradstufe 16 miteinander verbunden.

Kolben 4, Kurbelwelle 6, Schaltgetriebe 10 und Getriebeausgangsstrang 12 sind in einem Motorgehäuse 17, 117 angeordnet, welches aus mehreren Gehäuseteilen 18, 19, 20 bzw. 118, 119, 120 besteht. Das Motorgehäuse 17, 117 wird seitlich durch Gehäusedeckel 21, 21a abgeschlossen. Mit Bezugszeichen 22 ist ein Gaswechselventile 23, 24 aufnehmender Zylinderkopf bezeichnet. Weiters ist im Motorgehäuse 17, 117 eine von der Kurbelwelle 6 angetriebene Ausgleichswelle 25 angeordnet.

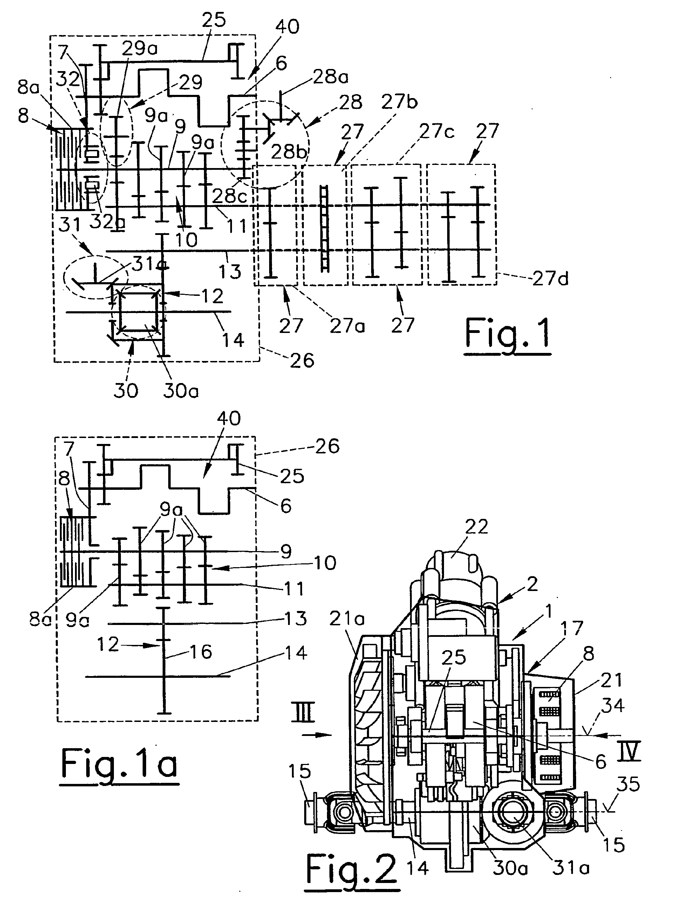

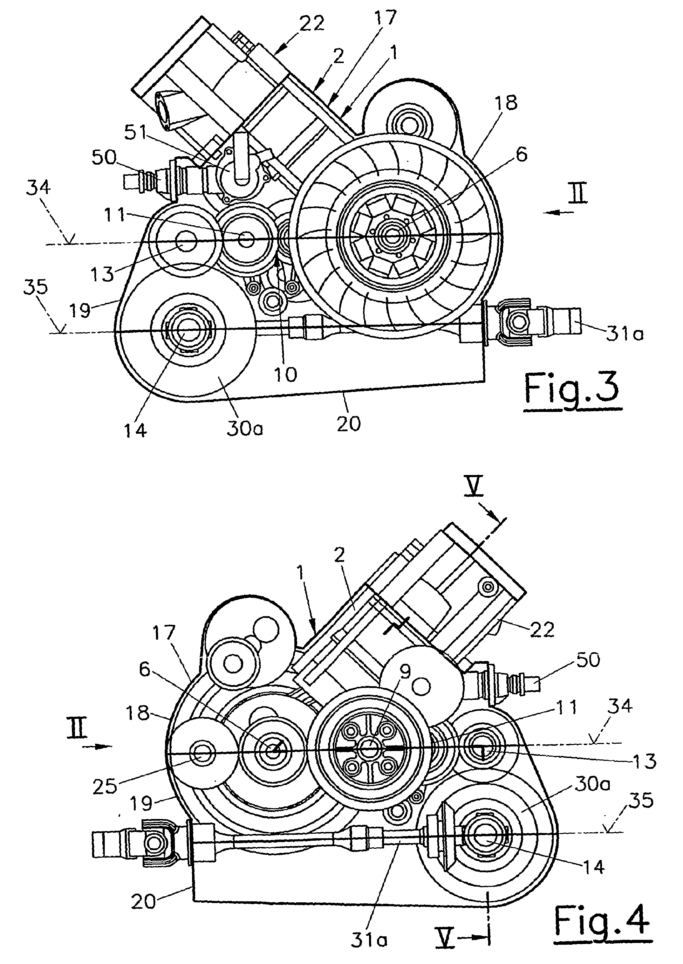

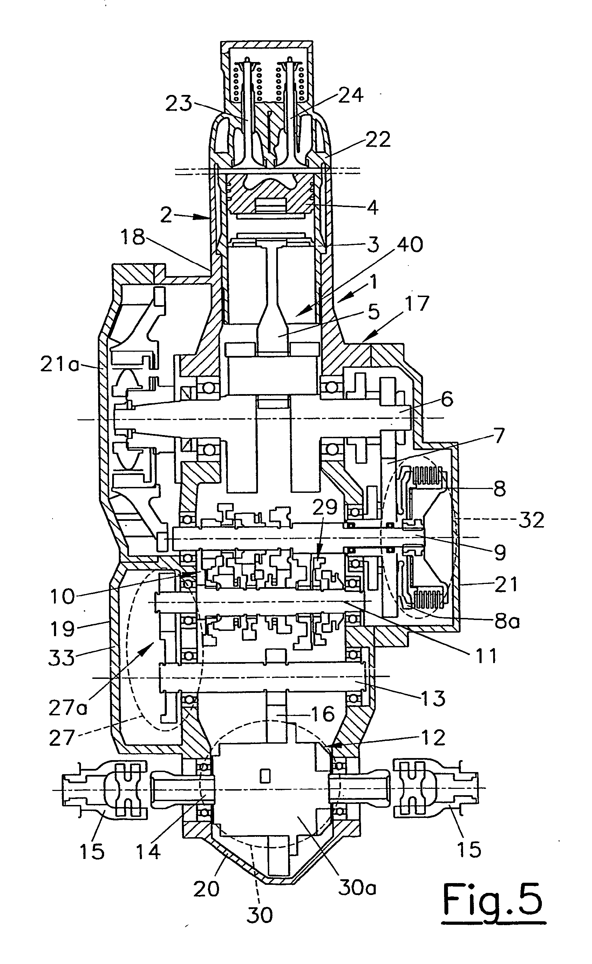

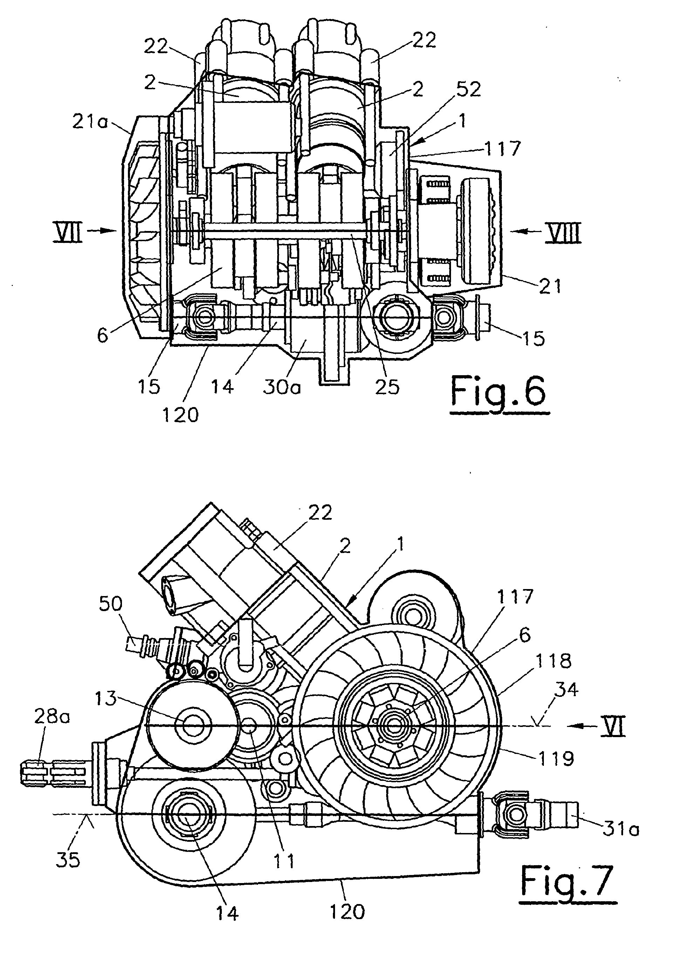

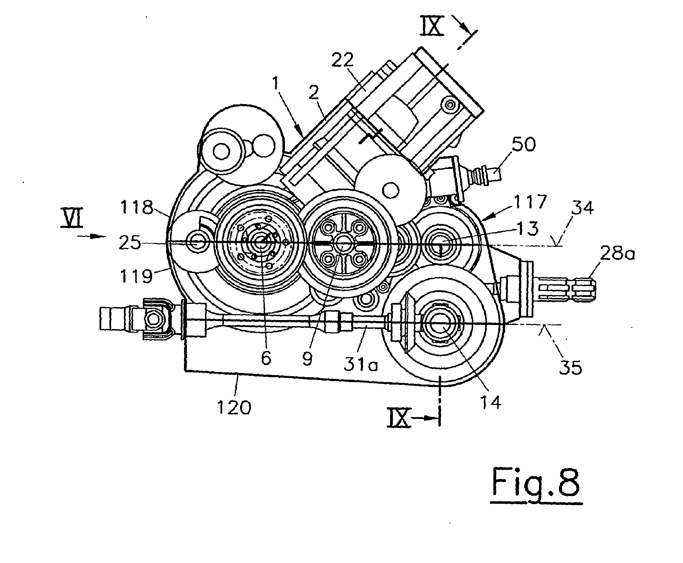

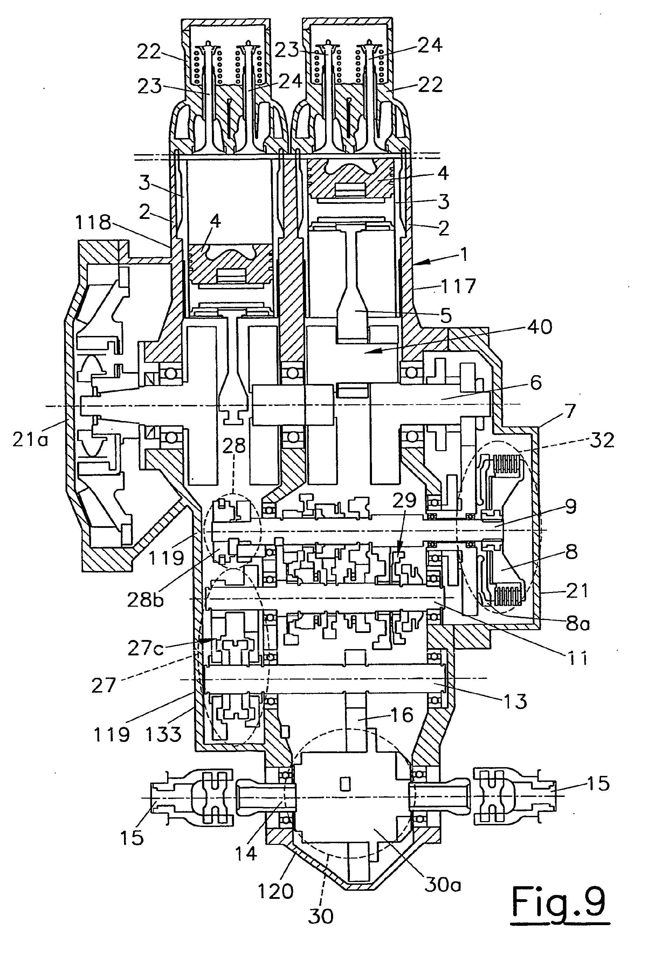

Das Motorgehäuse 17, 117 samt Kolben 4, Pleuelstange 5, Kurbelwelle 6, Schaltgetriebe 10, Schaltkupplung 8, Getriebeausgangsstrang 12 und Ausgleichswelle 25 bilden ein Hauptmodul 26, welches universell für die verschiedensten Fahrzeugarten hergestellt und eingesetzt werden kann, wobei die in den Fig. 2 bis 5 dargestellte erste Ausführungsvariante mit einem Zylinder 2 und die in den Fig. 6 bis 9 gezeigte zweite Ausführungsvariante mit zwei Zylindern 2 verschiedene Motorgehäuse 17, 117 aufweisen. Abgesehen vom Motorgehäuse 17, 117 sind die einzelnen Teile aber im Wesentlichen baugleich ausgeführt.

Innerhalb des Hauptmoduls 26 sind Schaltgetriebe 10 und Getriebeausgangsstrang 12 getrennt ausgeführt. Je nach Anforderungen kann das Hauptmodul 26 mit einem ersten Nebenmodul 27, einem zweiten Nebenmodul 28, einem dritten Nebenmodul 29, einem vierten Nebenmodul 30, einem fünften Nebenmodul 31 und/oder einem sechsten Nebenmodul 32 bestückt werden. Das erste Nebenmodul 27 besteht dabei aus einer die zweite Schaltwelle 11 und die erste Sekundärwelle 13 verbindenden Getriebestufe, welche als einfache Getriebestufe 27a, als Umkehrgetriebestufe 27b, als Untersetzungsgetriebestufe 27c oder als Kriechgang-Getriebestufe 27d ausgebildet sein. Abgedeckt wird die Getriebestufe des ersten Nebenmoduls 27 durch eine Gehäusewand 33, 133, welche einstückig mit dem Gehäuseteil 18, 19 bzw. 118, 119 ausgeführt sein kann.

Hauptmodul 26 und Nebenmodule 27, 28, 29, 30, 31 und 32 sind in den Fig. 1 und 1a mit strichlierten Linien angedeutet.

Für die Verwendung bei Kleintraktoren wird ein zweites Nebenmodul 28 am Hauptmodul 26 angebracht. Das zweite Nebenmodul 28 beinhaltet eine an die erste Getriebewelle 9 über eine Abzweiggetriebestufe 28b angeschlossene Zapfwelle 28a. Die Zapfwelle 28a wird am Zahnrad 28c der Getriebestufe 28b direkt auf der ersten Getriebewelle 9 geschaltet.

In der ersten Ausführungsvariante ist die Brennkraftmaschine ohne Retourgang, das heißt ohne schaltbarer Umkehrgetriebestufe 29a ausgeführt. Die schaltbare Umkehrgetriebestufe 29a kann als drittes Nebenmodul 29 am Hauptmodul 26 angebaut werden, wobei die Schaltung der fünf Vorwärtsgänge und des Retourganges über eine - nicht weiter dargestellte - Schaltwalze erfolgt. Die Getriebeuntersetzungen der Untersetzungsgetriebestufe 27c und der Kriechgang-Untersetzungsstufe 27d des ersten Nebenmoduls 27 werden durch eine weitere Schaltwalze betätigt.

In der einfachsten Ausführungsvariante ist im Getriebeausgangsstrang 12 kein Differential vorgesehen. Diese Ausführung eignet sich beispielsweise für sogenannte Autorikschas. Das Differentialgetriebe 30a wird als viertes Nebenmodul 30 am Hauptmodul 26, und zwar im Bereich der zweiten Sekundärwelle 14 des Getriebeausgangsstranges 12 angebaut. Für Fahrzeuge mit Allradantrieb, beispielsweise sogenannte ATV (all terrain vehicle) oder Kleintraktoren (SMCTsmall capacity tractor) ist ein fünftes Nebenmodul 31 mit einer Abtriebsgetriebestufe 31a am Hauptmodul 26 vorgesehen. Der Vierradantrieb kann über einen der Achsabtriebe des Differentials 30a des vierten Nebenmoduls 30 (welches je nach Einbausituation an der Vorder- oder der Hinterachse sein kann) oder über ein Mitteldifferential bei Motorlängseinbau realisiert werden. In letztem Falle sind in der Allradvariante drei Differentiale möglich, wobei das Differential 30a des Nebenmoduls 30 als Mitteldifferential ausgeführt ist und zusätzliche Achsdifferentiale an der Vorder- und an der Hinterachse vorgesehen sind. Alternativ zu den Achsdifferentialen an den Antriebsachsen kann ein starrer Durchtrieb oder eine Rutschkupplung vorgesehen sein.

Zur Realisierung einer Semiautomatik des 5-Ganggetriebes bzw. für ein automatisches Anfahren und Schalten ohne Kupplung kann ein sechstes Nebenmodul 32 mit einer Fliehkraftkupplung 32a zur Kraftübertragung am Eingang der ersten Schaltwelle 9 vorgesehen sein. Die Betätigung des Schalthebels bewirkt als überlagerte Funktion der Fliehkraftkupplung 32a die zum Schalten erforderliche Trennung zwischen der Kurbelwelle 6 und dem Getriebe 10. Die Fliehkraftkupplung 32a beinhaltet dabei eine Freilaufeinrichtung, um die Motorbremswirkung zu gewährleisten.

Die Lage der Wellen (Kurbelwelle 6, erste Getriebewelle 9, zweite Getriebewelle 11, erste Sekundärwelle 13, zweite Sekundärwelle 14, Ausgleichswelle 25) ist in allen Motorvarianten gleich. Dadurch ergibt sich das gleiche Bearbeitungs-und Bohrbild, wodurch das Motorgehäuse 17, 117 für alle Motorvarianten, also sowohl für Einzylinder als auch für Zweizylinder, an der gleichen Bearbeitungsstation erfolgen kann. Die Bearbeitung fast aller Getriebewellen bzw. Lagerstellen kann in einem Arbeitsgang von einer Seite z.B. mit einem Mehrspindelbohrwerk erfolgen.

Die Ausgleichswelle 25, die Kurbelwelle 6, die erste Getriebewelle 9, die zweite Getriebewelle 11, die erste Sekundärwelle 13 und die zweite Sekundärwelle 14 liegen in der selben Ebene, welche durch die erste Teilungsebene 34 zwischen dem ersten Gehäuseteil 18, 118 und den zweiten Gehäuseteil 19, 119 gebildet ist.

Die zweite Sekundärwelle 14 befindet sich im Bereich einer zweiten Teilungsebene 35 zwischen dem zweiten Gehäuseteil 19, 119 und dem dritten Gehäuseteil 20, 120, wobei die zweite Teilungsebene 35 parallel zur ersten Teilungsebene 34 ausgebildet sein kann.

Durch den modularen Aufbau des Konzeptes können Diesel, Benzin, Ein- und Zweizylinder mit möglichst vielen Gleichteilen und nur zwei unterschiedlichen Motorgehäusen 17 bzw. 117 (Einzylinder bzw. Zweizylinder) realisiert werden. Die Motorgehäuse 17, 117 für Ein- und Zweizylinder können mit den selben Bearbeitungswerkzeugen bearbeitet werden, wobei die Schneiden zur Bearbeitung des zweiten Zylinders bei der Bearbeitung des Einzylindergehäuses ins "Freie" laufen.

Durch den Ein- und Anbau von Komponenten wie z.B. unterschiedliche Sekundäruntersetzungsstufen durch die ersten Nebenmodule 27, Differential 30a des vierten Nebenmoduls 30, Fliehkraftkupplung 32a des sechsten Nebenmoduls 32, Zapfwelle 28a des zweiten Nebenmoduls 28, Abtriebsgetriebestufe 31a des fünften Nebenmoduls 31 kann die jeweilige Motorvariante (Benzin oder Diesel, Ein- oder Zweizylinder) an den Einsatz im Fahrzeug angepasst werden.

Die Sekundäruntersetzungsstufen des ersten Nebenmoduls 27 erlauben den Einbau des Motors in verschiedenen Fahrzeugtypen, wobei mit der einfachen Getriebestufe 27a eine Anordnung des Getriebes 10 und des Getriebeausgangsstranges 12 hinter dem Motor und bei einer Umkehrgetriebestufe 27 mit einer Kette eine Anordnung des Getriebes 10 und des Getriebeausgangsstranges 12 vor dem Motor (Motor hinter Achse) möglich ist. Durch die schaltbare Untersetzungsstufe 27c bzw. die schaltbare Kriechgang-Untersetzungsstufe 27d kann die Brennkraftmaschine 1 für ATV (all terrain vehicle) oder Kleintraktoren (SMCTsmall capacity tractor) eingesetzt werden.

Folgende Gleichteile lassen sich realisieren:
- Selbes Kurbelgehäuse für Einzylinderbenzin- und Dieselmotoren,
- Selbes Kurbelgehäuse für Zweizylinderbenzin- und Dieselmotoren,
- Gebaute Kurbewellen 6 für alle Varianten mit unterschiedlicher Bearbeitung,
- Selber Zylinderkopf 22 für Ein- und Zweizylinderbenzinmotoren (Einzelzylinderköpfe),
- Selber Zylinderkopf 22 für Ein- und Zweizylinderdieselmotoren (Einzelzylinderköpfe),
- Selbe Position für Nockenwelle und Ventiltrieb für alle Motorvarianten,
- Selber Achsabstand für alle Sekundäruntersetzungsvarianten,
- Selber Gehäusedeckel 21 und/oder 21a für alle Sekundäruntersetzungsvarianten,
- Selbes Wechselgetriebe 10 für alle Motorvarianten.

Im Folgenden werden tabellarisch sinnvolle Kombinationsmöglichkeiten für den Einbau des erfindungsgemäßen Motors in verschiedene Zielfahrzeuge exemplarisch angegeben:

**Tab. 1**

| Autorikscha | Diesel | | Benzin | |
|---|---|---|---|---|
| Zylinderzahl | 1 | 2 | 1 | 2 |
| einfache Getriebestufe 27a | X | X | - | - |
| Umkehrgetriebestufe 27b | O | O | - | - |
| Untersetzungsgetriebestufe 27c | - | - | - | - |
| Kriechgang-Untersetzungsgetriebestufe 27d | - | - | - | - |
| Zapfwelle 28a | - | - | - | - |
| Differential 30a | O | O | - | - |
| Allradabtrieb 31a | - | - | - | - |
| Fliehkraftkupplung 32a | - | - | - | - |

| | | | | |
|---|---|---|---|---|
| X.... standard | | | | |
| O.... optional | | | | |

**Tab. 2**

| ATV (all terrain vehicle) | Diesel | | Benzin | |
|---|---|---|---|---|
| Zylinderzahl | 1 | 2 | 1 | 2 |
| einfache Getriebestufe 27a | - | - | - | - |
| Umkehrgetriebestufe 27b | - | - | - | - |
| Untersetzungsgetriebestufe 27c | - | X | X | X |
| Kriechgang-Untersetzungsgetriebestufe 27d | - | - | - | - |
| Zapfwelle 28a | - | O | - | O |
| Differential 30a | - | X | X | X |
| Allradabtrieb 31a | - | X | X | X |
| Fliehkraftkupplung 32a | - | X | X | X |

| | | | | |
|---|---|---|---|---|
| X.... standard | | | | |
| O.... optional | | | | |

**Tab. 3**

| Kleintraktor (SMCT) | Diesel | | Benzin | |
|---|---|---|---|---|
| Zylinderzahl | 1 | 2 | 1 | 2 |
| einfache Getriebestufe 27a | - | - | - | - |
| Umkehrgetriebestufe 27b | - | - | - | - |
| Untersetzungsgetriebestufe 27c | - | - | - | - |
| Kriechgang-Untersetzungs-Getriebestufe 27d | O | X | - | - |
| Zapfwelle 28a | X | X | - | - |
| Differential 30a | O | X | - | - |
| Allradabtrieb 31a | O | X | - | - |
| Fliehkraftkupplung 32a | - | - | - | - |

| | | | | |
|---|---|---|---|---|
| X.... standard | | | | |
| O.... optional | | | | |

**Tab. 4**

| Kleinstauto (micro car) | Diesel | | Benzin | |
|---|---|---|---|---|
| Zylinderzahl | 1 | 2 | 1 | 2 |
| einfache Getriebestufe 27a | O | O | - | - |
| Umkehrgetriebestufe 27b | X | X | - | - |
| Untersetzungsgetriebestufe 27c | - | - | - | - |
| Kriechgang-Untersetzungsgetriebestufe 27d | - | - | - | - |
| Zapfwelle 28a | - | - | - | - |
| Differential 30a | X | X | - | - |
| Allradabtrieb 31a | - | - | - | - |
| Fliehkraftkupplung 32a | X | X | - | - |

| | | | | |
|---|---|---|---|---|
| X.... standard | | | | |
| O.... optional | | | | |

## Patentansprüche

1. Modulartig aufgebaute Brennkraftmaschine (1) mit einem Motorgehäuse (17, 117) mit einem Kurbeltrieb (40) mit zumindest einem in einem Zylinder (2) hin- und hergehenden Kolben (4), welcher über eine Pleuelstange (5) auf eine Kurbelwelle (6) einwirkt, mit einem über eine trennbare Kupplung (8) mit der Kurbelwelle (6) verbundenen Wechselgetriebe (10) und einem mit zumindest einer Antriebswelle (15) eines Fahrzeugs verbindbaren Getriebeausgangsstrang (12), **dadurch gekennzeichnet, dass** die Brennkraftmaschine (1) zumindest ein die Baugruppen Motorgehäuse (17), Kurbeltrieb (40), Wechselgetriebe (10) und Getriebeausgangsstrang (12) beinhaltendes Hauptmodul (26) und zumindest ein am Hauptmodul (26) anbaubares Nebenmodul (27, 28, 29, 30, 31, 32) aufweist, wobei Wechselgetriebe (10) und Getriebeausgangsstrang (12) innerhalb des Hauptmoduls (26) mechanisch getrennt ausgeführt und durch Anbauen eines ersten Nebenmoduls (27) am Hauptmodul (26) drehverbindbar sind.

2. Brennkraftmaschine (1) nach Anspruch 1, **dadurch gekennzeichnet, dass** das Hauptmodul (26) zusätzlich zumindest eines der Bauteile Kurbelwelle (6), Massenausgleichswelle (25) oder schaltbare Kupplung (8) aufweist.

3. Brennkraftmaschine (1) nach Anspruch 1 oder 2, **dadurch gekennzeichnet, dass** das erste Nebenmodul (27) zumindest eine Getriebestufe aus der Gruppe einfache Getriebestufe (27a), Umkehrgetriebestufe (27b), Untersetzungsgetriebestufe (27c) und Kriechgang-Untersetzungsgetriebestufe (27d) beinhaltet, wobei vorzugsweise der Achsabstand der Getriebestufe dem Achsabstand zwischen einer ausgangsseitigen Getriebewelle (11) des Wechselgetriebes (10) und einer eingangsseitigen Sekundärwelle (13) des Getriebeausgangsstranges (12) entspricht.

4. Brennkraftmaschine (1) nach einem der Ansprüche 1 bis 3, **dadurch gekennzeichnet, dass** das erste Nebenmodul (27) für alle Getriebevarianten die gleiche Gehäusewand (33, 133) aufweist.

5. Brennkraftmaschine (1) nach einem der Ansprüche 1 bis 4, **dadurch gekennzeichnet, dass** ein zweites Nebenmodul (28) mit einem Abzweiggetriebe (28b) für eine Zapfwelle (28a) an einer Getriebewelle (9, 11) des Wechselgetriebes (10) anbaubar ist.

6. Brennkraftmaschine (1) nach einem der Ansprüche 1 bis 5, **dadurch gekennzeichnet, dass** ein drittes Nebenmodul (29) mit einer schaltbaren Umkehrgetriebestufe (29a) für das Wechselgetriebe (10) am Hauptmodul (26) anbaubar ist.

7. Brennkraftmaschine (1) nach einem der Ansprüche 1 bis 6, **dadurch gekennzeichnet, dass** ein viertes Nebenmodul (30) mit einem Differentialgetriebe (30a) für den Getriebeausgangsstrang (12) am Hauptmodul (26) anbaubar ist.

8. Brennkraftmaschine (1) nach Anspruch 7, **dadurch gekennzeichnet, dass** ein fünftes Nebenmodul (31) mit einer Abtriebsgetriebestufe (31a) für den Getriebeausgangsstrang (12) am Hauptmodul (26) oder dem vierten Nebenmodul (30) anbaubar ist.

9. Brennkraftmaschine (1) nach einem der Ansprüche 1 bis 8, **dadurch gekennzeichnet, dass** ein sechstes Nebenmodul (32) mit einer Fliehkraftkupplung (32a) am Eingang des Wechselgetriebes (10) am Hauptmodul (26) anbaubar ist.

10. Brennkraftmaschine (1) nach einem der Ansprüche 1 bis 9, **dadurch gekennzeichnet, dass** das Hauptmodul (26) ein Motorgehäuse (17) für einen Zylinder (2) oder ein Motorgehäuse (117) für zwei Zylinder (2) beinhaltet.

11. Brennkraftmaschine (1) nach einem der Ansprüche 1 bis 10, **dadurch gekennzeichnet, dass** zumindest fünf Wellen, vorzugsweise zumindest die Kurbelwelle (6), die Ausgleichswelle (25), die erste Getriebewelle (9), die zweite Getriebewelle (11) und die erste Sekundärwelle (13) in einer Ebene liegen, welche vorzugsweise eine erste Teilungsebene (34) zwischen zwei Gehäuseteilen (18, 19; 118, 119) ist.

12. Brennkraftmaschine (1) nach einem der Ansprüche 1 bis 11, **dadurch gekennzeichnet, dass** das Hauptmodul (26) für zumindest zwei verschiedene Fahrzeugarten aus der Gruppe Autorikscha, ATV, Kleintraktor und Kleinstauto einsetzbar ist.

13. Brennkraftmaschine nach einem der Ansprüche 1 bis 12, mit einem oder mehreren Zylindern (2), **dadurch gekennzeichnet, dass** alle Bearbeitungsflächen und Bohrungen des Motorgehäuses (17) mit der Zylinderzahl n gleich angeordnet werden wie eine Teilmenge aller Bearbeitungsflächen und Bohrungen eines ähnlichen Motorgehäuses (117) mit einer höheren Zylinderzahl m > n und dass das Motorgehäuse (17) mit der Zylinderzahl n auf einer Bearbeitungsstation durchgeführt werden kann, deren Bearbeitungswerkzeuge für das ähnliche Motorgehäuse (117) mit höherer Zylinderzahl m konfiguriert und adjustiert sind.

## Claims

1. Modular internal combustion engine (1) comprising an engine housing (17, 117) with a crankshaft drive (40) having at least one reciprocating piston (4) in a cylinder (2), which acts on a crankshaft (6) by means of a connecting rod (5), and a variable-speed gear box (10) connected to the crankshaft (6) via a disengaging clutch (8), and a gearbox output train (12) which connects to at least one drive shaft (15) of a vehicle, **characterized in that** the internal combustion engine (1) is provided with at least one main module (26) including the subassemblies engine housing (17), crankshaft drive (40), variable-speed gearbox (10), and gearbox output train (12), and at least one auxiliary module (27, 28, 29, 30, 31, 32) attachable to the main module (26), and that no mechanical connection between the variable-speed gearbox (10) and the gearbox output train (12) is provided within the main module (26) but that a rotational connection is facilitated by attaching a first auxiliary module (27) to the main module (26).

2. Internal combustion engine (1) according to claim 1, **characterized in that** the main module (26) additionally includes at least one of the parts crankshaft (6), mass balancer shaft (25), or switchable clutch (8).

3. Internal combustion engine (1) according to claim 1 or 2, **characterized in that** the first auxiliary module (27) contains at least one gear step from the group of simple gear (27a), reverse gear (27b), reduction gear (27c), crawler reduction gear (27d), the axis distance of this gear step preferably corresponding to the axis distance between an output shaft (11) of the variable-speed gearbox (10) and a secondary input shaft (13) of the gearbox output train (12).

4. Internal combustion engine (1) according to any of claims 1 to 3, **characterized in that** the first auxiliary module (27) has the same housing wall (33, 133) in all gear variants.

5. Internal combustion engine (1) according to any of claims 1 to 4, **characterized in that** a second auxiliary module (28) with an output gear (28b) for a power take-off shaft (28a) can be attached to a gear shaft (9, 11) of the variable-speed gearbox (10).

6. Internal combustion engine (1) according to any of claims 1 to 5, **characterized in that** a third auxiliary module (29) with a shiftable reverse gear (29a) for the variable-speed gearbox (10) can be attached to the main module (26).

7. Internal combustion engine (1) according to any of claims 1 to 6, **characterized in that** a fourth auxiliary module (30) with a differential gear (30a) for the gearbox output train (12) can be attached to the main module (26).

8. Internal combustion engine (1) according to claim 7, **characterized in that** a fifth auxiliary module (31) with an output driving gear (31a) for the gearbox output train (12) can be attached to the main module (26) or the fourth auxiliary module (30).

9. Internal combustion engine (1) according to any of claims 1 to 8, **characterized in that** a sixth auxiliary module (32) with a centrifugal clutch (32a) can be attached to the main module (26) at the input side of the variable-speed gearbox (10).

10. Internal combustion engine (1) according to any of claims 1 to 9, **characterized in that** the main module (26) includes an engine housing (17) configured for one cylinder (2) or an engine housing (117) for two cylinders (2).

11. Internal combustion engine (1) according to any of claims 1 to 10, **characterized in that** at least five shafts, and preferably at least crank shaft (6), balancer shaft (25), first gearbox shaft (9), second gearbox shaft (11) and first secondary shaft (13) are positioned in one and the same plane, which is preferentially a first partitioning plane (34) between two housing parts (18, 19; 118, 119).

12. Internal combustion engine (1) according to any of claims 1 to 11, **characterized in that** the main module (26) can be used for at least two types of vehicles from the group of motor-rickshaws, ATVs, small tractors and micro-cars.

13. Internal combustion engine (1) according to any of claims 1 to 12, with one or more cylinders (2), **characterized in that** all surfaces to be machined and all bores of the engine housing (17) with n cylinders have the same position as a subset of all surfaces and bores of a similar engine housing (117) with a higher number m > n of cylinders, and that the engine housing (17) with n cylinders can be machined on a working station whose tools are configured and adjusted for the machining of the similar engine housing (117) with the higher number m of cylinders.

## Revendications

1. Moteur à combustion (1) à structure modulaire ayant un carter de moteur (17, 117) muni d'une transmission à manivelle (40) ayant au moins un piston (4) à mouvement alternatif dans un cylindre (2) et coopérant par une bielle (5) avec un vilebrequin (6),
une boîte de vitesses (10) reliée par un embrayage (8) au vilebrequin (6) et au moins une ligne de sortie de boîte de vitesses (12) reliée à l'arbre d'entraînement (15) d'un véhicule,
**caractérisé en ce que**
le moteur à combustion (1) comporte au moins un module principal (26) composé des ensembles formés par le carter du moteur (17), la transmission à manivelle (40), la boîte de vitesses (10) et la ligne de sortie de boîte de vitesse (12), et
au moins un module auxiliaire (27, 28, 29, 30, 31, 32) qui s'installe sur le module principal (26), et
la boîte de vitesse (10) et la ligne de sortie de boîte de vitesses (12) sont mécaniquement séparées dans le module principal (26) et sont reliées en rotation au module principal (26) lors du montage d'un premier module auxiliaire (27).

2. Moteur à combustion (1) selon la revendication 1,
**caractérisé en ce que**
le module principal (26) comporte en plus au moins l'un des composants suivants : vilebrequin (6), arbre d'équilibrage (25) ou embrayage commutable (8).

3. Moteur à combustion (1) selon la revendication 1 ou 2,
**caractérisé en ce que**
le premier module auxiliaire (27) comporte au moins un rapport de boîte de vitesses du groupe formé par un rapport de vitesse simple (27a), un rapport de vitesse d'inversion (27b), un rapport de vitesse de démultiplication (27c) et un rapport de vitesse de démultiplication de déplacement rampant (27d),
et de préférence l'entraxe des rapports de la boîte de vitesses correspond à l'entraxe du premier arbre de transmission (11) côté sortie de la boîte de vitesses (10) et d'un arbre secondaire (13) côté entrée de la ligne de sortie (12) de boîte de vitesses.

4. Moteur à combustion (1) selon l'une des revendications 1 à 3,
**caractérisé en ce que**
le premier module auxiliaire (27) à la même paroi de carter (33, 133) pour toutes les variantes de boîtes de vitesses.

5. Moteur à combustion (1) selon l'une des revendications 1 à 4,
**caractérisé par**
un second module auxiliaire (28) muni d'une transmission de dérivation (28b) pour une prise de force (28a) qui se monte sur l'arbre de transmission (9, 11) de la boîte de vitesses (10).

6. Moteur à combustion (1) selon l'une des revendications 1 à 5,
**caractérisé en ce qu'**
un troisième module auxiliaire (29) avec un rapport de transmission d'inversion (29a), commutable pour la boîte de vitesses (10) peut se monter sur le module principal (26).

7. Moteur à combustion (1) selon l'une des revendications 1 à 6,
**caractérisé en ce qu'**
un quatrième module auxiliaire (130) avec un différentiel (30a) pour la ligne de sortie de boîte de vitesses (12) peut se monter sur le module principal (26).

8. Moteur à combustion (1) selon la revendication 7,
**caractérisé en ce qu'**
un cinquième module auxiliaire (31) comportant un rapport de transmission de sortie (31a) pour la ligne de sortie de boîte de vitesses (12) se monte sur le module principal (26) ou sur le quatrième module auxiliaire (30).

9. Moteur à combustion (1) selon l'une des revendications 1 à 8,
**caractérisé par**
un sixième module auxiliaire (32) muni d'un embrayage centrifuge (32a) à l'entrée de la boîte de vitesses (10) se monte sur le module principal (26).

10. Moteur à combustion (1) selon l'une des revendications 1 à 9,
**caractérisé en ce que**
le module principal (26) comporte un carter de moteur (17) pour un cylindre (2) ou un carter de moteur (117) pour deux cylindres (2).

11. Moteur à combustion (1) selon l'une des revendications 1 à 10,
**caractérisé en ce qu'**
au moins cinq arbres de préférence au moins le vilebrequin (6), l'arbre d'équilibrage (25), le premier arbre de boîte de vitesses (9), le second arbre de boîte de vitesses (11) et le premier arbre secondaire (13) sont situés dans un plan qui est de préférence un premier plan de division (34) entre deux parties de boîtier (18, 19 ; 118, 119).

12. Moteur à combustion (1) selon l'une des revendications 1 à 11,
**caractérisé en ce que**
le module principal (26) est applicable à au moins deux types de véhicules différents du groupe pousse-pousse motorisé, ATV, petits tracteurs et petits véhicules.

13. Moteur à combustion (1) selon l'une des revendications 1 à 12, comportant un ou plusieurs cylindres (2),
**caractérisé en ce que**
toutes les surfaces d'usinage et les perçages du carter du moteur (17) pour un nombre de cylindres n, sont installées de la même manière qu'un sous-ensemble de toutes les surfaces d'usinage et perçages d'un carter de moteur (117), analogue, ayant un nombre de cylindres m > n, et le carter (17) du moteur avec un nombre de cylindre n peut être réalisé dans un poste d'usinage dont les outils d'usinage sont configurés et ajustés pour un carter de moteur (117) analogue ayant un nombre de cylindres plus élevés.
